(19) 

Europäisches
Patentamt
European
Patent Office
Office européen
des brevets

(11) **EP 1 428 338 B1**

(12) **EUROPEAN PATENT SPECIFICATION**

(45) Date of publication and mention
of the grant of the patent:
**30.06.2010 Bulletin 2010/26**

(21) Application number: **02773449.0**

(22) Date of filing: **17.09.2002**

(51) Int Cl.:
*H04J 3/00* (2006.01)    *H04J 1/00* (2006.01)

(86) International application number:
**PCT/US2002/029553**

(87) International publication number:
**WO 2003/025513 (27.03.2003 Gazette 2003/13)**

(54) **METHOD AND APPARATUS FOR INTERFERENCE SIGNAL CODE POWER AND NOISE VARIANCE ESTIMATION**

VERFAHREN UND VORRICHTUNG ZUR STÖRSIGNALCODELEISTUNGS- UND RAUSCHVARIANZ SCHÄTZUNG

PROCEDE ET APPAREIL POUR ESTIMER LA PUISSANCE DE CODE DE SIGNAL PARASITE ET LA VARIANCE DU BRUIT

(84) Designated Contracting States:
**AT BE BG CH CY CZ DE DK EE ES FI FR GB GR IE IT LI LU MC NL PT SE SK TR**

(30) Priority: **18.09.2001 US 322917 P**
**13.06.2002 US 171285**

(43) Date of publication of application:
**16.06.2004 Bulletin 2004/25**

(73) Proprietor: **INTERDIGITAL TECHNOLOGY CORPORATION**
**Wilmington, DE 19801 (US)**

(72) Inventors:
• **KIM, Younglok**
**Fort Lee, NJ 07024 (US)**
• **PAN, Jung-Lin**
**Selden, NY 11784 (US)**
• **ZEIRA, Ariela**
**Huntington, NY 11743 (US)**

(74) Representative: **Bohnenberger, Johannes et al**
**Meissner, Bolte & Partner GbR**
**Widenmayerstrasse 48**
**80538 München (DE)**

(56) References cited:
**EP-A- 0 996 113     US-A- 5 263 033**
**US-A- 5 278 871     US-A- 5 606 580**
**US-A- 6 144 711**

**Description**

BACKGROUND

The present invention is generally related to wireless time division duplex (TDD) or frequency division duplex (FDD) communication systems. More particularly, the present invention is related to a TDD communication system which implements an estimation method for interference signal code power (ISCP) and noise variance using a partial sample averaging.

In a UMTS terrestrial radio access TDD system, the estimation of ISCP and noise variance has become Increasingly important. The receiver design requires an estimate of the noise variance for the performing multiple user detection of the channel estimation and minimum mean square error-block linear equalization (MMSE-BLE) algorithm used by multi-user detection (MUD). In addition, the dynamic channel assignment dynamic channel allocation (DCA) and timeslot allocation relies on an accurate estimate of interference signal code power (ISCP) as well. As defined in the 3GPP TS25.225, the measurement "timeslot ISCP" is only a measure of the intercell interference. Because intercell interference can be treated as white Gaussian noise, the estimates of ISCP and noise variance can be combined into one step. A prior estimation method uses the chip sequence in the guard period. However, due to the timing advance and the length of delay spread, there are not a sufficient number of chips in the guard period available for performing the estimation.

EP-A1- 0966113 describes a method and an apparatus for performing equalization in a radio receiver specifically to be used in a GSM handset.

US-A1-5278871 discloses a method and an apparatus for estimating signal weighting paremeters in a receiver for use in a soft-decoding.

SUMMARY

The present invention provides a background noise power estimator using the estimated coefficients of the channel impulse responses.

BRIEF DESCRIPTION OF THE DRAWINGS

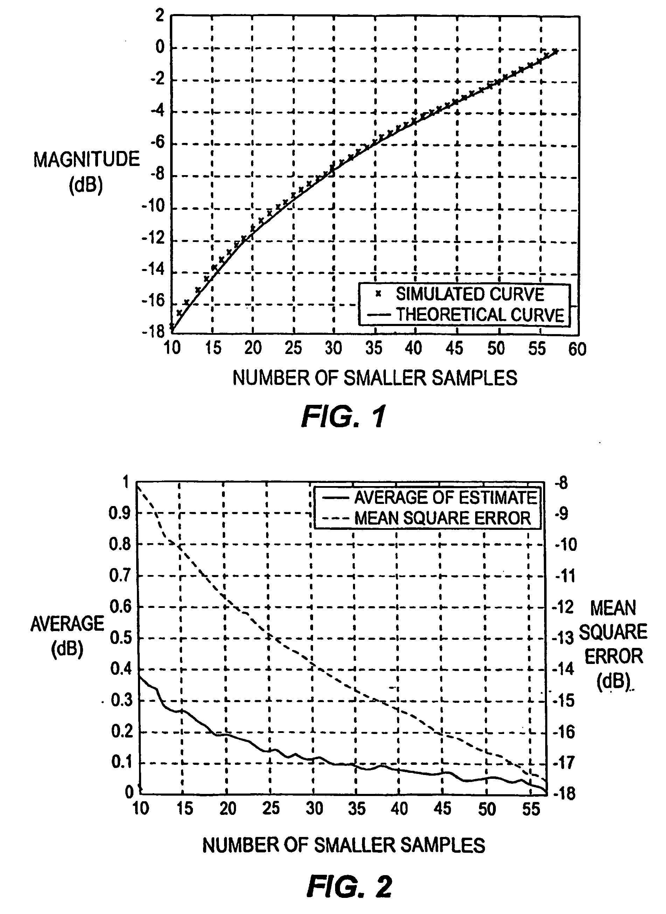

Figure 1 is a theoretical ensemble average power of the truncated Rayleigh distributed random variable and the numerical average of the sample power with respect to the number of smaller samples out of $W = 57$ chips of each channel estimate, and showing the simulated curve and the theoretical curve.

Figure 2 is a plot showing the average and mean square error of the estimated noise variance using the algorithm 1 and normalized by the actual noise variance. 10,000 independent simulations are averaged.

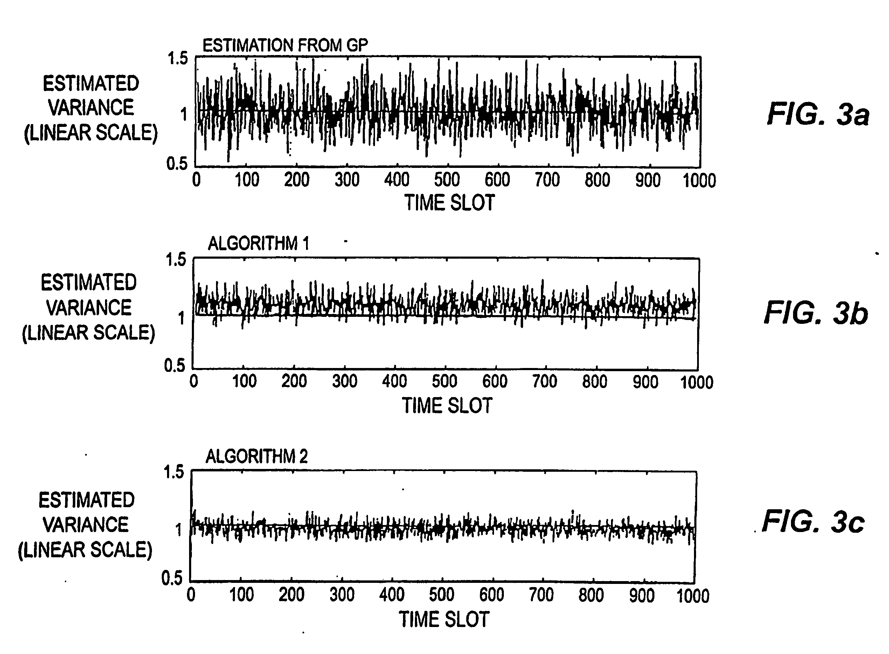

Figure 3 is an estimated noise variance sequence normalized by the actual noise variance. Working group 4 (WG4) case 2 (slow fading) at 3dB Eb/No. Figure 3a shows the estimation from the guard period (GP) and Figures 3b and 3c show the estimated noise variance respectively employing algorithm 1 and 2.

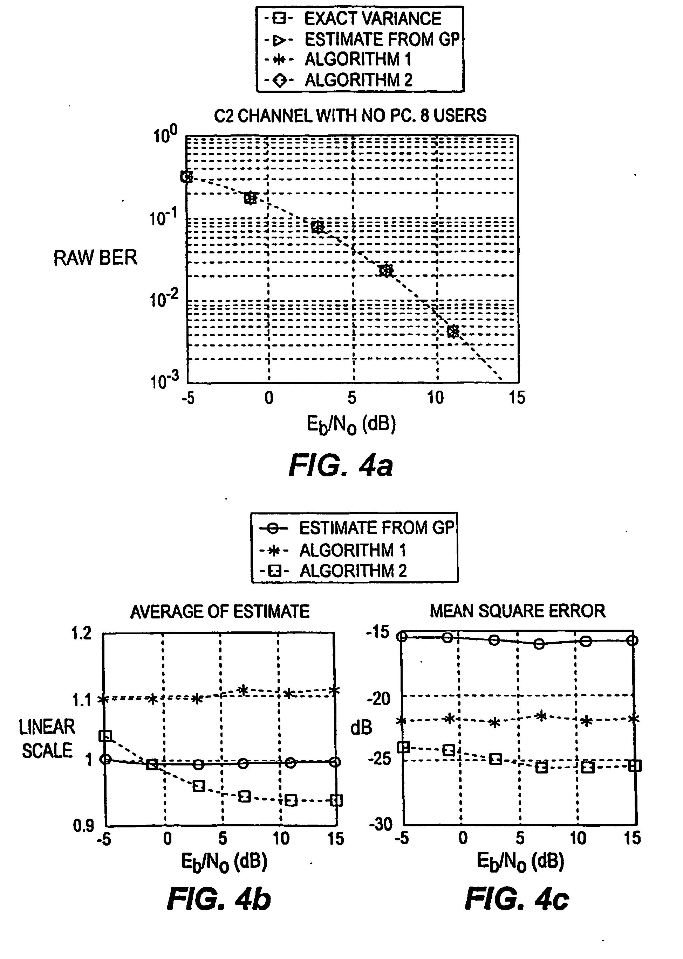

Figure 4(a) shows Raw BER curves, Figure 4(b) shows the normalized average of the estimated noise variance and Figure 4(c) shows the Mean square error of the estimates normalized by the actual variance. Algorithm 1 is utilized with 30 samples, and algorithm 2 is utilized with 6 recursions in working group 4 (WG4) channel case 2 (slow fading).

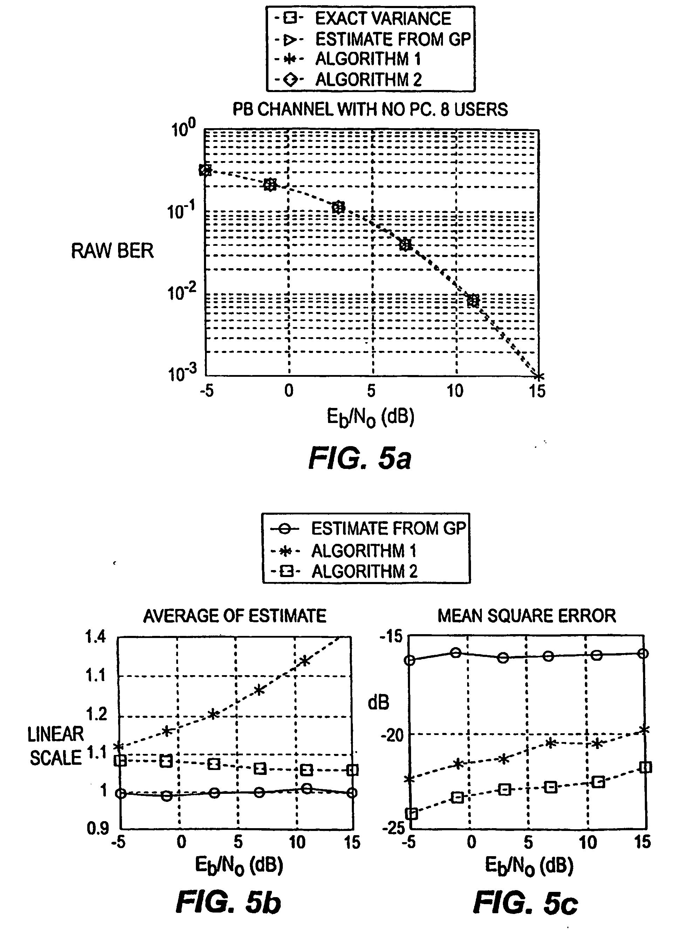

Figure 5(a) shows the raw BER curves, Figure 5(b) shows the normalized average of the estimated noise variance and Figure 5(c) shows the Mean square error of the estimates normalized by the actual variance. Algorithm 1 with 30 samples, and algorithm 2 with 6 recursions in International Telecommunication Union (ITU) pedestrian B channel case.

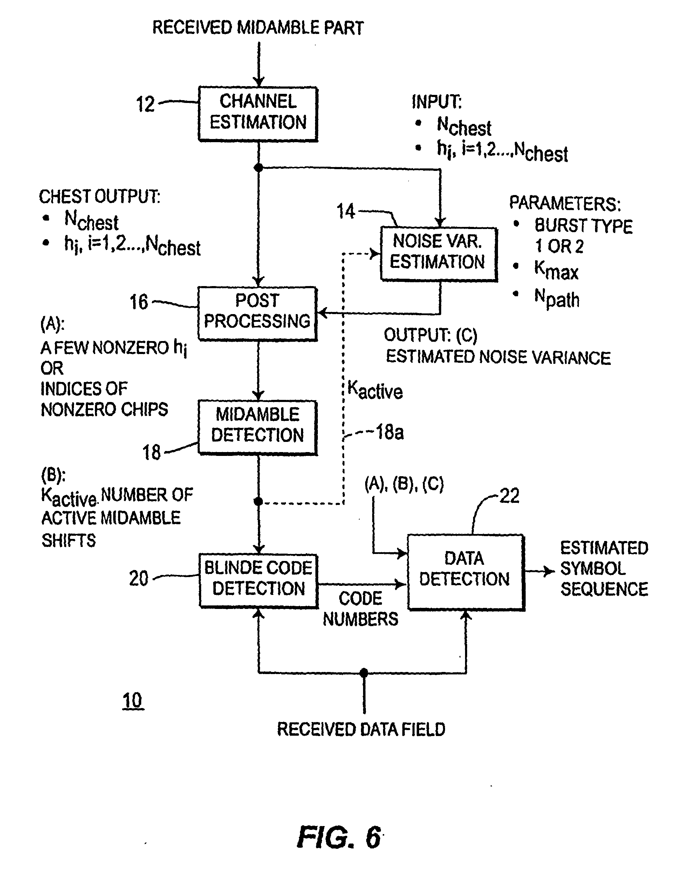

Figure 6 is a block diagram of channel estimation and post processing for a UE receiver showing the manner in which noise variance estimator obtained in accordance with the method and apparatus of the present invention is employed.

DETAILED DESCRIPTION OF THE PREFERRED EMBODIMENT

In the present invention, an estimation method of ISCP and noise variance using the output information of the channel estimator is used. The method overcomes the problems of prior art estimation methods and offers much better accuracy in estimates used by dynamic channel allocation (DCA) and multi-user detection (MUD). In particular, an algorithm of partial sample averaging is used to realize the computation.

Although the present inventive method of estimation of ISCP and noise variance is based on a WCDMA TDD system, the algorithm can be applied to all kinds of communications systems using the information of estimated channel response, including WCDMA FDD systems. Figures 3b and 3c show the noise variance estimations employing algorithms 1 and 2 of the present invention compared with the noise variance obtained from the guard period (GP).

The following is a description of the signal model for Steiner channel estimation. Let $K_{max}$ be the maximum number of distinct midambles allowed by one basic midamble code. Then $K_{max} = 16$, 8 or 4 for burst type 1 and $K_{max}$ = 6 or 3 for burst type 2. The signal model for a received sequence is represented by:

$$\underline{r} = G\underline{h} + \underline{n} = \begin{bmatrix} G1|G2|\cdots|GK \end{bmatrix} \begin{bmatrix} \underline{h}^{(1)} \\ \underline{h}^{(2)} \\ \vdots \\ \underline{h}^{(K)} \end{bmatrix} + n$$

Equation (1)

and the maximum-likelihood estimate (MLE) is given by:

$$\hat{\underline{h}} = \left( G^H G \right)^{-1} G^H \underline{r} = \underline{h} + \underline{w},$$

Equation (2)

where:

Equation (3)

$$\underline{w} = \left( G^H G \right)^{-1} G^H \underline{n}.$$

In the case when the active midamble shifts are exactly known, (uplink or downlink with a common midamble shift), the number of block columns of matrix $G$ and the interference can be reduced. However, there is no performance gain as can be seen from a comparison of the maximum midamble shifts ($K_{max}$) and the active midamble shifts ($K_{active}$). In fact, the complexity of the system is increased since the coefficients of the pseudo inverse matrix must to be computed per every timeslot. Assuming the maximum number of midambles, they will be computed only once after the cell specification. Moreover, the output sequence with no signal component is useful for the ISCP and noise variance estimation even in the case of a known midamble. Hence the channel estimator is desired to provide $K_{max}$ number of channel estimates no matter how many midambles are active.

The following describes the proposed estimation method for ISCP and noise variance in accordance with the present invention. The chip length of the output sequence of the channel estimator is always $K_{max}W$, where $W$ is the length of the channel impulse response. Most of the output sequences comprise only the ISCP and a noise component, and a few include the signal and a noise component. When the active midambles are known the estimation can be easily obtained from the channel estimates for the inactive midambles. However, for the cases of uplink and downlink with a common midamble where the midambles are unknown, estimation becomes problematic. The forgoing description is directed to downlink channels with multiple midambles where the active midambles are unknown.

The ISCP and noise variance will be referred to, for simplicity, as the noise variance for algorithm 1, partial sample average, the probability density function of the amplitude of the complex noise is a Rayleigh function represented by:

EP 1 428 338 B1

$$f(x) = \frac{2x}{\sigma_w^2} \exp\left(-\frac{x^2}{\sigma_w^2}\right) U(x) \quad ; \quad \text{Equation (4)}$$

where $\sigma_w^2$ is its variance.

The goal is to estimate the variance from the smallest number of samples. The average of the estimate and the mean square error both decrease with an increasing number of samples as shown in Figure 3. Obviously, the average of the sample power does not converge to the ensemble average power. Rather, when the smallest $N$ out of $W$ samples are used, the sample variance will converge to the second moment represented by:

$$\sigma_a^2 = \int_{x=0}^{a} x^2 f(x)\,dx \quad ; \quad \text{Equation (5)}$$

where a satisfies $\Pr\{x < a\} = \dfrac{N}{W}$. After a short derivation,

$$a = \sqrt{-\sigma_w^2 \ln\left(1 - \frac{N}{W}\right)} \quad , \quad \text{Equation (6)}$$

and the ensemble average power of smallest $N$ out of $W$ samples converge to:

$$\sigma_a^2 = c\sigma_w^2 ; \quad \text{Equation (7)}$$

where:

$$c = \frac{N}{W} + \left(1 - \frac{N}{W}\right) \cdot \ln\left(1 - \frac{N}{W}\right) \quad . \quad \text{Equation (8)}$$

Hence, the scaling factor $c$ is a function of the ratio $N/W$. The theoretical and numerical scaling factors with respect to $N$ are shown in Figure 1 in the situation of burst type 1 and $W = 57$.

Using this scaling factor, the noise variance estimate from the $N$ smallest samples out of $W$ becomes:

4

$$\hat{\sigma}^2_w = \frac{1}{cKN} \sum_{j=l}^{K} \sum_{i=l}^{N} |h_i^{(j)}|^2 \qquad , \qquad \text{Equation (9)}$$

where $h_i^{(j)}$, i = 1,2,..., W are in the order of ascending amplitudes.

The foregoing describes the parameters for the estimation method of noise variance, as well as those used by channel estimation. The estimation method will be described at the system level and with the help of some system parameters. The system parameters include the following:

- $W$: Channel length.
- $K_{max}$: Maximum number of midamble shifts.
- $P$: Length of the basic midamble code, which is the length of the input of the channel estimation block.
- $L_m$: Length of midamble code.
- $L_{chest}$: Output length of the channel estimator. It is not necessarily equal to W. $K_{max}$ especially for the burst type 1 extended midamble case.
- $h_i$, i=1,2,...,$L_{ches}$: Estimated joint channel coefficients.
- $K_{active}$: Active number of midamble shifts.
- $N_{pl}$: Maximum number of paths per channel.
- $N_{p2}$: Actual number of paths per channel.

The specifications and the relations of the above parameters are summarized in Table 1:

TABLE 1

| Burst structure | Burst type 1 or 3 $P = 456, L_m = 512$ | | | Burst type 2 $P = 192, L_m = 256$ | |
|---|---|---|---|---|---|
| $K_{max}$ | 16 | 8 | 4 | 6 | 3 |
| $W$ | 28 or 29* | 57 | 57 | 32 | 64 |
| $L_{chest}$ | 456 | 456 | 456 | 192 | 192 |
| * W = 28 for even midamble number and W=29 for odd number. | | | | | |

The location of the ISCP and noise variance estimation block 14 at user equipment (UE) 10 is shown in Figure 6. In the uplink, midamble detection 18 and blind code detection 20 blocks are not required since they are already known at the BS receiver. The downlink noise estimation will use $K_{max}$, instead of $K_{active}$ since the active number of midambles is not known and it will be estimated by the midamble detection. The information of the number of active midambles optionally can be fed back to noise (ISCP) estimation block 14, from midamble 18, through path 18a, but results in a processing delay with little gain in the overall detection performance.

Here, the proposed estimation algorithm, using a partial sample average, is summarized as follows:

$$\hat{\sigma}^2_n = G \cdot \gamma(r) \cdot \frac{1}{N_{sample}} \cdot \sum_{i=l}^{N_{sample}} |h_{n(i)}|^2 \qquad \text{Equation (10)}$$

where:

$$N_{sample} = L_{chest} - N_{pl} \cdot K_{active},$$ Equation (11)

$$\gamma(r) = \left[1 + \left(\frac{1}{r} - 1\right) \cdot \ln(1 - r)\right]^{-1},$$ Equation (12)

$$r = \frac{N_{sample}}{L_{chest}} : \text{sample ratio},$$ Equation (13)

G=400 for burst types 1 and 3,
and,
G=169 for burst type 2.

n(i), 1=1,2,...,:Lchest is the index of $l$-th smallest coefficient, (i.e., $h_{n(i)}$, $i = 1,2,...L_{chest}$) which are in the order of ascending amplitude. To simplify the implementation, the constant values can be fixed for each case as shown in Table 2, which shows the scaling constant $T$ with respect to the timeslot configurations; where $P$ is the number of available samples, and those numbers marked with a double asterisk may not be assumed in practice. Here the constant T is defined by:

$$T = \frac{G \cdot \gamma(r)}{N_{sample}},$$ Equation (14)

and the estimated noise variance becomes

$$\hat{\sigma}_n^2 = T \cdot \sum_{i=1}^{N_{sample}} \left|h_{n(i)}\right|^2$$ Equation (15)

TABLE 2

|  | $K_{max}$ | $N$ pl = 6 |  | $N$ pl = 10 |  |
|---|---|---|---|---|---|
|  |  | $N$ samples | $T$ | $N$ samples | $T$ |
| Burst Type 1 P = 456 | 4 | 432** | 1.1** | 411 | 1.3 |
|  | 8 | 411 | 1.3 | 375 | 1.7 |
|  | 16 | 360 | 1.9 | 296** | 3.1** |
| Burst Type 2 P = 192 | 3 | 174 | 1.3 | 158 | 1.7 |
|  | 6 | 158 | 1.7 | 132** | 2.7** |

As an alternative, noise variance is estimated from the ignored coefficients of the estimated channel output and upgraded recursively as per the following:

$$\hat{\sigma}_n{}^2 = \frac{1}{KW} \sum_{j=1}^{K} \sum_{i=1}^{W} \left| h_i{}^{(j)} - \hat{h}_i{}^{(j)} \right|^2 ,$$

where $\hat{h}_i{}^{(j)}$ are the channel estimates after the post processing with the noise variance estimates $\hat{\sigma}_{n-1}{}^2$, and the initial values of $\hat{h}_i{}^{(j)}$ are all zeros.

The number of recursions is six (6) in the simulation, which can be reduced depending on the propagation channel condition.

An example simulation will now be explained. The following is a list of assumptions and parameters used for the present example:

- Burst type 1.
- W = 57.
- 8 data bursts with spreading factor (SF) =16.
- 8 distinct midambles.
- WG4 case 2 and ITU pedestrian B channel cases.
- 30 samples for algorithm 1.
- 6 recursions for the algorithm 2.

The MMSE-BLE performances according to the different schemes are very similar as shown in Figure 4(a) and Figure 5(a). Hence, the data detection performance is not so sensitive to the estimation error normalized by the actual noise variance shown in Figure 4(c) and Figure 5(c).

The conclusions obtained are:

- The variance estimate by Algorithm 1 is biased to a little higher value especially with higher SNR and with more multipaths, which can be observed from Figure 5(b) and 6(b).

- Algorithm 2 has the best performance but the multiple threshold tests have to be performed for the post processing. The complexity increase is dependent on the number of iterations and the complexity of the comparisons.

- If the noise variance is only for MMSE-BLE and post processing, then algorithm 1 is sufficient for most wireless situations. However, when more accurate noise variance estimation is required where the overall communication system performance is much more sensitive to noise variance estimation error, then algorithm 2 will be the best choice.

## Claims

1.  A method for use in wireless communication systems of one of the time division duplex (TDD) and frequency division duplex (FDD) type, comprising:

    performing a channel estimation on a midamble portion of a received burst to obtain a plurality of channel impulse responses $h_{m(i)}$;
    estimating noise <u>variance</u> based on the equation

$$\hat{\sigma}_n{}^2 = T \cdot \sum_{i=1}^{N_{sample}} \left| h_{n(i)} \right|^2$$

    where

$$T = \frac{G \cdot \gamma(r)}{N_{sample}}, \quad \gamma^{(2)} = [\,1 + (\frac{1}{2} - 1) \cdot ln\ (1 - 2)]^{-1}, \quad r = \frac{N_{sample}}{L_{chest}},$$

$N_{sample} = L_{chst} - N_{pi} \cdot K_{max}$, where h represents the amplitudes of the samples employed, where $L_{chest}$ is the output length of the channel estimator, $N_{pl}$ is the maximum number of paths per channel and $K_{max}$ is the maximum number of midamble shifts.

2. The method of claim 1 wherein, when the burst received is of burst type 1, setting G equal to 400.

3. The method of claim 1 wherein, when the burst received is of burst type 2, setting G equal to 169.

4. The method of claim 1 wherein, when the burst received is of burst type 3, setting G equal to 400.

5. The method of claim 1 comprising obtaining the scaling constant T from a look-up table, wherein T increases with an increasing value of midamble shifts.

6. The method of claim 5 wherein the scaling constant is selected in accordance with the permissible midamble shifts which are 4, 8 and 16, when the burst received is burst type 1.

7. The method of claim 5 wherein the scaling constant selected in accordance with the permissible midamble shifts which are 3 and 6, when the burst received is a burst type 2.

8. The method of claim 1 further comprising utilizing the values of the plurality of channel impulse responses and the estimated noise variance to obtain one of a few non zero hi and indices of non zero chips, wherein a chip is equal to $K_{max}W$, where W is the length of the channel impulse response.

9. The method of claim 8 further comprising determining the number of active midamble shifts based on the estimated noise variance.

10. The method of claim 9 further comprising utilizing the active midamble shifts and a received data field for generating code numbers.

11. The method of claim 10 further comprising utilizing the received data field, code numbers, estimated noise variance, active midamble shifts, and the estimated noise variance for determining an estimated symbol sequence.

12. The method of claim 1 further comprising utilizing the number of active midamble shifts for revising the noise variance estimation.

13. Apparatus for use in wireless communication systems of one of the time division duplex (TDD) and frequency division duplex (FDD) type, comprising:

    means for performing a channel estimation on a midamble portion of a received burst to obtain a plurality of channel impulse responses $h_{m(i)}$;
    means for estimating noise variance based on the equation

$$\hat{\sigma}^2_n = T \cdot \sum_{i=l}^{N_{sample}} \left| h_{n(i)} \right|^2$$

    where

$$T = \frac{G \cdot \gamma(r)}{N_{sample}}, \quad \gamma^{(2)} = [\,1 + (\frac{1}{2} - 1) \cdot ln\,(1-2)]^{-1}, \quad r = \frac{N_{sample}}{L_{chest}},$$

$N_{sample} = L_{chest} - N_{pi} \cdot K_{max}$,

where h represents the amplitudes of the samples employed, where $L_{chest}$ is the output length of the channel estimator, $N_{pi}$ is the maximum number of paths per channel and $K_{max}$ is the maximum number of midamble shifts.

14. The apparatus of claim 13 wherein, when the burst received is of burst type 1, means are provided for setting G equal to 400.

15. The apparatus of claim 13 wherein, when the burst received is of burst type 2, means are provided for setting G equal to 169.

16. The apparatus of claim 13 wherein, when the burst received is of burst type 3, means are provided for setting G equal to 400.

17. The apparatus of claim 13 further comprising means for obtaining the scaling constant T from a look-up table, wherein T increases with an increasing value of midamble shifts.

18. The apparatus of claim 17 further comprising means for selecting the scaling constant in accordance with the permissible midamble shifts which are 4, 8 and 16, when the burst received is burst type 1.

19. The apparatus of claim 17 further comprising means for selecting the scaling constant in accordance with the permissible midamble shifts which are 3 and 6, when the burst received is a burst type 2.

20. The apparatus of claim 13 further comprising means utilizing the received data field, code numbers, estimated noise variance and active midamble shifts for determining an estimated symbol sequence.

21. The apparatus of claim 13 further comprising means utilizing the number of active midamble shifts for revising the noise variance estimation.

22. A method for estimating noise variance in wireless communication systems of one of the time division duplex (TDD) and frequency division duplex (FDD) type, comprising:

   performing a channel estimation on a midambule portion of a received burst to obtain a plurality of channel impulse responses;
   recursively estimating noise variance based on the equation;

$$\hat{\sigma}_n{}^2 = \frac{1}{KW} \sum_{j=1}^{K} \sum_{l=1}^{W} \left| h_l^{(j)} - \hat{h}_l^{(j)} \right|^2,$$

where $\hat{h}_l^{(j)}$ are the channel estimates after performing multi-user detection with the noise variance estimates $\hat{\sigma}_{n-1}{}^2$,

and the initial values of $\hat{h}_l^{(j)}$ are all zeros.

23. The method of claim 22 wherein six (6) recursions are performed during estimating the noise variance.

24. The method of claim 23 wherein the noise variance is estimated from ignored co-efficients of the estimated channel.

25. Apparatus for estimating noise variance in wireless communication systems of one of the time division duplex (TDD) and frequency division duplex (FDD) type, comprising:

means for performing a channel estimation on a midamble portion of a received burst to obtain a plurality of channel impulse responses;

means for recursively estimating noise variance based on the equation:

$$\hat{\sigma}_n{}^2 = \frac{1}{KW} \sum_{j=1}^{K} \sum_{i=1}^{W} \left| h_i{}^{(j)} - \hat{h}_i{}^{(j)} \right|^2 ,$$

where $\hat{h}_i{}^{(j)}$ are the channel estimates after performing multi-user detection with the noise variance estimates

$\hat{\sigma}_{n-1}{}^2$, and the initial values of $\hat{h}_i{}^{(j)}$ are all zeros, the noise variance being estimated from the ignored coefficients of the estimated channel output and upgraded recursively.

26. The apparatus of claim 25 wherein the recursive means includes means for performing six (6) recursions.

**Patentansprüche**

1. Verfahren zur Verwendung in drahtlosen Kommunikationssystemen der Art von Zeit-Duplex (TDD) und/oder Frequenz-Duplex (FDD), Folgendes umfassend:

Durchführen einer Kanalschätzung an einem Zwischenblockabschnitt eines empfangenen Signalblocks, um mehrere Kanalimpulsantworten $h_{n(i)}$ zu erhalten;
Abschätzen einer Rauschvarianz auf Grundlage der Gleichung

$$\hat{\sigma}_n{}^2 = T \cdot \sum_{i=l}^{N_{sample}} | h_{n(i)} |^2$$

worin

$$T = \frac{G \cdot \gamma(r)}{N_{sample}}, \quad \gamma^{(2)} = [\, 1 + (\frac{1}{2} - 1) \cdot ln \ (1 - 2)]^{-1}, \quad r = \frac{N_{sample}}{L_{chest}},$$

$N_{sample} = L_{chest} - N_{pi} \cdot K_{max}$ ist,
wobei h die Amplituden der verwendeten Proben darstellt, $L_{chest}$ die Ausgabelänge der Kanalschätzeinrichtung ist, $N_{pl}$ die Höchstanzahl von Pfaden pro Kanal ist, und $K_{max}$, die Höchstanzahl an Zwischenblockverschiebungen ist.

2. Verfahren nach Anspruch 1, wobei, wenn der empfangene Signalblock vom Signalblocktyp 1 ist, G gleich 400 angesetzt wird.

3. Verfahren nach Anspruch 1, wobei, wenn der empfangene Signalblock vom Signalblocktyp 2 ist, G gleich 169 angesetzt wird.

4. Verfahren nach Anspruch 1, wobei, wenn der empfangene Signalblock vom Signalblocktyp 3 ist, G gleich 400 angesetzt wird.

5. Verfahren nach Anspruch 1, umfassend, den Skalierungsfaktor T aus einer Nachschlagtabelle zu ermitteln, wobei T mit einem zunehmenden Wert an Zwischenblockverschiebungen zunimmt.

**6.** Verfahren nach Anspruch 5, wobei der Skalierungsfaktor in Übereinstimmung mit den zulässigen Zwischenblockverschiebungen, bei denen es sich um 4, 8 und 16 handelt, ausgewählt wird, wenn der empfangene Signalblock vom Signalblocktyp 1 ist.

**7.** Verfahren nach Anspruch 5, wobei der Skalierungsfaktor in Übereinstimmung mit den zulässigen Zwischenblockverschiebungen, bei denen es sich um 3 und 6 handelt, ausgewählt wird, wenn der empfangene Signalblock vom Signalblocktyp 2 ist.

**8.** Verfahren nach Anspruch 1, darüber hinaus umfassend, die Werte der mehreren Kanalimpulsantworten und die geschätzte Rauschvarianz zu verwenden, um einen von ein paar wenigen nicht Null betragenden hi-Indexzahlen und Indexzahlen für nicht Null betragende Teilstücke zu erhalten, wobei ein Teilstück gleich $K_{max}W$ ist, worin W die Länge der Kanalimpulsantwort ist.

**9.** Verfahren nach Anspruch 8, darüber hinaus umfassend, die Anzahl von aktiven Zwischenblockverschiebungen auf Grundlage der geschätzten Rauschvarianz zu bestimmen.

**10.** Verfahren nach Anspruch 9, darüber hinaus umfassend, die aktiven Zwischenblockverschiebungen und ein empfangenes Datenfeld zu verwenden, um Codenummern zu generieren.

**11.** Verfahren nach Anspruch 10, darüber hinaus umfassend, das empfangene Datenfeld, die Codenummern, die geschätzte Rauschvarianz, die aktiven Zwischenblockverschiebungen und die geschätzte Rauschvarianz zu verwenden, um eine geschätzte Symbolsequenz zu bestimmen.

**12.** Verfahren nach Anspruch 1, darüber hinaus umfassend, die Anzahl aktiver Zwischenblockverschiebungen zu verwenden, um die Rauschvarianzschätzung zu revidieren.

**13.** Vorrichtung zur Verwendung in drahtlosen Kommunikationssystemen der Art von Zeit-Duplex (TDD) und/oder Frequenz-Duplex (FDD), Folgendes umfassend:

Einrichtungen zum Durchführen einer Kanalschätzung an einem Zwischenblockabschnitt eines empfangenen Signalblocks, um mehrere Kanalimpulsantworten $h_{n(i)}$ zu erhalten;
Einrichtungen zum Abschätzen einer Rauschvarianz auf Grundlage der Gleichung

$$\hat{\sigma}_n^{\ 2} = T \cdot \sum_{i=l}^{N_{sample}} |h_{n(i)}|^2$$

worin

$$T = \frac{G \cdot \gamma(r)}{N_{sample}}, \quad \gamma^{(2)} = [\, 1 + (\frac{1}{2} - 1) \cdot ln\ (1-2)]^{-1}, \quad r = \frac{N_{sample}}{L_{chest}},$$

$N_{sample} = L_{chest} - N_{pi} \cdot K_{max}$ ist,
wobei h die Amplituden der verwendeten Proben darstellt, $L_{chest}$ die Ausgabelänge der Kanalschätzeinrichtung ist, $N_{pl}$ die Höchstanzahl von Pfaden pro Kanal ist, und $K_{max}$ die Höchstanzahl an Zwischenblockverschiebungen ist.

**14.** Vorrichtung nach Anspruch 13, wobei, wenn der empfangene Signalblock vom Signalblocktyp 1 ist, Einrichtungen vorgesehen sind, um G gleich 400 anzusetzen.

**15.** Vorrichtung nach Anspruch 13, wobei, wenn der empfangene Signalblock vom Signalblocktyp 2 ist, Einrichtungen vorgesehen sind, um G gleich 169 anzusetzen.

16. Vorrichtung nach Anspruch 13, wobei, wenn der empfangene Signalblock vom Signalblocktyp 3 ist, Einrichtungen vorgesehen sind, um G gleich 400 anzusetzen.

17. Vorrichtung nach Anspruch 13, darüber hinaus Einrichtungen umfassen, um den Skalierungsfaktor T aus einer Nachschlagtabelle zu ermitteln, wobei T mit einem zunehmenden Wert an Zwischenblockverschiebungen zunimmt.

18. Vorrichtung nach Anspruch 17, darüber hinaus Einrichtungen umfassend, um den Skalierungsfaktor in Übereinstimmung mit den zulässigen Zwischenblockverschiebungen, bei denen es sich um 4, 8 und 16 handelt, wenn der empfangene Signalblock vom Signalblocktyp 1 ist, auszuwählen.

19. Vorrichtung nach Anspruch 17, darüber hinaus Einrichtungen umfassend, um den Skalierungsfaktor in Übereinstimmung mit den zulässigen Zwischenblockverschiebungen, bei denen es sich um 3 und 6 handelt, wenn der empfangene Signalblock vom Signalblocktyp 2 ist, auszuwählen.

20. Vorrichtung nach Anspruch 13, darüber hinaus Einrichtungen umfassend, die das empfangene Datenfeld, die Codenummern, die geschätzte Rauschvarianz, die aktiven Zwischenblockverschiebungen verwenden, um eine geschätzte Symbolsequenz zu bestimmen.

21. Vorrichtung nach Anspruch 13, darüber hinaus Einrichtungen umfassend, welche die Anzahl aktiver Zwischenblockverschiebungen verwenden, um die Rauschvarianzschätzung zu revidieren.

22. Verfahren zur Rauschvarianzschätzung in drahtlosen Kommunikationssystemen der Art von Zeit-Duplex (TDD) und/oder Frequenz-Duplex (FDD), Folgendes umfassend:

Durchführen einer Kanalschätzung an einem Zwischenblockabschnitt eines empfangenen Signalblocks, um mehrere Kanalimpulsantworten zu erhalten;
rekursives Abschätzen einer Rauschvarianz auf Grundlage der Gleichung

$$\hat{\sigma}_n{}^2 = \frac{1}{KW} \sum_{jpl}^{K} \sum_{jal}^{W} |\hat{h}_i^{(j)} - h_i^{(j)}|^2$$

worin $\hat{h}_i^{(j)}$ die Kanalschätzwerte nach dem Durchführen einer Mehrbenutzererfassung mit den Rauschvari-

anzschätzwerten $\hat{\sigma}_{n-1}{}^2$ sind, und die Anfangswerte von $\hat{h}_i^{(j)}$ alle Null sind.

23. Verfahren nach Anspruch 22, wobei sechs (6) Rekursionen während des Schätzens der Rauschvarianz durch geführt werden.

24. Verfahren nach Anspruch 23, wobei die Rauschvarianz aus übergangenen Koeffizienten des geschätzten Kanals geschätzt wird.

25. Vorrichtung zur Rauschvarianzschätzung in drahtlosen
Kommunikationssystemen der Art von Zeit-Duplex (TDD) und/oder Frequenz-Duplex (FDD), Folgendes umfassend:

Einrichtungen zum Durchführen einer Kanalschätzung an einem Zwischenblockabschnitt eines empfangenen Signalblocks, um mehrere Kanalimpulsantworten zu erhalten;
Einrichtungen zum rekursiven Abschätzen einer Rauschvarianz auf Grundlage der Gleichung

$$\hat{\sigma}_n{}^2 = \frac{1}{KW} \sum_{jpl}^{K} \sum_{jal}^{W} | \hat{h}_i^{(j)} - h_i^{(j)} |^2$$

worin $\hat{h}_i^{(j)}$ die Kanalschätzwerte nach dem Durchführen einer Mehrbenutzererfassung mit den Rauschvari-anzschätzwerten $\hat{\sigma}_{n-1}^2$ sind, und die Anfangswerte von $\hat{h}_i^{(j)}$ alle Null sind, wobei die Rauschvarianz aus den übergangenen Koeffizienten des geschätzten Kanals geschätzt werden, die ausgegeben und rekursiv aktualisiert werden.

26. Vorrichtung nach Anspruch 25, wobei die rekursiven Einrichtungen Einrichtungen zum Durchführen von sechs (6) Rekursionen umfasst.

**Revendications**

1. Procédé destiné à être utilisé dans des systèmes de communication sans fil à duplexage temporel (TDD) et/ou à duplexage fréquentiel (FDD), comportant :

   l'exécution d'une estimation de canal sur une portion midambule d'une salve reçue pour obtenir une pluralité de réponses impulsionnelles de canal $h_{n(i)}$ ;
   l'estimation de la variance de bruit sur la base de l'équation :

$$\hat{\sigma}_n{}^2 = T \cdot \sum_{i=l}^{N_{sample}} | h_{n(i)} |^2$$

   où

$$T = \frac{G \cdot \gamma(r)}{N_{sample}}, \quad \gamma^{(2)} = [\, 1 + (\frac{1}{2} - 1) \cdot ln \ (1 - 2)]^{-1}, \quad r = \frac{N_{sample}}{L_{chest}},$$

   $N_{sample} = L_{chest} - N_{pl} \cdot K_{max}$, h représentant les amplitudes des échantillons employés, $L_{chest}$ étant la longueur de sortie de l'estimateur de canal, $N_{pl}$ étant le nombre maximum de chemins par canal et $K_{max}$ étant le nombre maximum de décalages de midambules.

2. Le procédé selon la revendication 1, où, quand la salve reçue est du type de salve 1, le réglage de G est égal à 400.

3. Le procédé selon la revendication 1, où, quand la salve reçue est du type de salve 2, le réglage de G est égal à 169.

4. Le procédé selon la revendication 1, où, quand la salve reçue est du type de salve 3, le réglage de G est égal à 400.

5. Le procédé selon la revendication 1, comportant l'obtention de la constante de mise à l'échelle T à partir d'une table de conversion, T augmentant selon une valeur croissante de décalages de midambules.

6. Le procédé selon la revendication 5, où la constante de mise à l'échelle est sélectionnée en fonction des décalages de midambules autorisés qui sont 4, 8 et 16, quand la salve reçue est du type de salve 1.

**7.** Le procédé selon la revendication 5, où la constante de mise à l'échelle est sélectionnée en fonction des décalages de midambules autorisés qui sont 3 et 6, quand la salve reçue est du type de salve 2.

**8.** Le procédé selon la revendication 1, comportant en outre l'utilisation des valeurs de la pluralité de réponses impulsionnelles de canal et de la variance de bruit estimée pour obtenir soit quelques hi autres que zéro, soit des indices de chips autres que zéro, un chip étant égal à $K_{max}W$, où W est la longueur de la réponse impulsionnelle de canal.

**9.** Le procédé selon la revendication 8, comportant en outre la détermination du nombre de décalages de midambules actifs sur la base de la variance de bruit estimée.

**10.** Le procédé selon la revendication 9, comportant en outre l'utilisation des décalages de midambules actifs et d'un champ de données reçu en vue de générer des nombres de code.

**11.** Le procédé selon la revendication 10, comportant en outre l'utilisation du champ de données reçu, des nombres de code, de la variance de bruit estimée, des décalages de midambules actifs, et de la variance de bruit estimée en vue de déterminer une séquence de symboles estimée.

**12.** Le procédé selon la revendication 1, comportant en outre l'utilisation du nombre de décalages de midambules actifs en vue de réviser l'estimation de variance de bruit.

**13.** Dispositif destiné à être utilisé dans des systèmes de communication sans fil à duplexage temporel (TDD) et/ou à duplexage fréquentiel (FDD), comportant :

des moyens d'exécution d'une estimation de canal sur une portion midambule d'une salve reçue pour obtenir une pluralité de réponses impulsionnelles de canal $h_{n(i)}$ ;
des moyens d'estimation de la variance de bruit sur la base de l'équation :

$$\hat{\sigma}_n^2 = T \cdot \sum_{i=l}^{N_{sample}} | h_{n(i)} |^2$$

où

$$T = \frac{G \cdot \gamma(r)}{N_{sample}}, \quad \gamma^{(2)} = [\, 1 + (\frac{1}{2} - 1) \cdot ln \ (1 - 2)]^{-1}, \quad r = \frac{N_{sample}}{L_{chest}},$$

$N_{sample} = L_{chest} - N_{pl} \cdot K_{max}$, h représentant les amplitudes des échantillons employés, $L_{chest}$ étant la longueur de sortie de l'estimateur de canal, $N_{pl}$ étant le nombre maximum de chemins par canal et $K_{max}$ étant le nombre maximum de décalages de midambules.

**14.** Le dispositif selon la revendication 13, où, quand la salve reçue est du type de salve 1, des moyens sont prévus pour régler G à 400.

**15.** Le dispositif selon la revendication 13, où, quand la salve reçue est du type de salve 2, des moyens sont prévus pour régler G à 169.

**16.** Le dispositif selon la revendication 13, où, quand la salve reçue est du type de salve 3, des moyens sont prévus pour régler G à 400.

**17.** Le dispositif selon la revendication 13, comportant en outre des moyens d'obtention de la constante de mise à l'échelle T à partir d'une table de conversion, T augmentant selon une valeur croissante de décalages de midambules.

**18.** Le dispositif selon la revendication 17, comportant en outre des moyens de sélection de la constante de mise à l'échelle en fonction des décalages de midambules autorisés qui sont 4, 8 et 16, quand la salve reçue est du type de salve 1.

19. Le dispositif selon la revendication 17, comportant en outre des moyens de sélection de la constante de mise à l'échelle en fonction des décalages de midambules autorisés qui sont 3 et 6, quand la salve reçue est du type de salve 2.

20. Le dispositif selon la revendication 13, comportant en outre des moyens d'utilisation du champ de données reçu, des nombres de code, de la variance de bruit estimée et des décalages de midambules actifs en vue de déterminer une séquence de symboles estimée.

21. Le dispositif selon la revendication 13, comportant en outre des moyens d'utilisation du nombre de décalages de midambules actifs en vue de réviser l'estimation de variance de bruit.

22. Procédé d'estimation de la variance de bruit dans des systèmes de communication sans fil à duplexage temporel (TDD) et/ou à duplexage fréquentiel (FDD), comportant :

l'exécution d'une estimation de canal sur une portion midambule d'une salve reçue pour obtenir une pluralité de réponses impulsionnelles de canal ;
l'estimation récursive de la variance de bruit sur la base de l'équation :

$$\hat{\sigma}_n^{\,2} = \frac{1}{KW} \sum_{j=1}^{K} \sum_{j=1}^{W} |\hat{h}_i^{(j)} - h_i^{(j)}|^2$$

où $\hat{h}_i^{(j)}$ sont les estimations de canal après exécution d'une détection multi-utilisateur avec les estimations de variance de bruit $\hat{\sigma}_{n-1}^2$, et les valeurs initiales de $\hat{h}_i^{(j)}$ sont toutes zéro.

23. Le procédé selon la revendication 22, où six (6) récursions sont exécutées pendant l'estimation de la variance de bruit.

24. Le procédé selon la revendication 23, où la variance de bruit est estimée à partir de coefficients ignorés du canal estimé.

25. Dispositif d'estimation de la variance de bruit dans des systèmes de communication sans fil à duplexage temporel (TDD) et/ou à duplexage fréquentiel (FDD), comportant :

des moyens d'exécution d'une estimation de canal sur une portion midambule d'une salve reçue pour obtenir une pluralité de réponses impulsionnelles de canal ;
des moyens d'estimation récursive de la variance de bruit sur la base de l'équation :

$$\hat{\sigma}_n^{\,2} = \frac{1}{KW} \sum_{j=1}^{K} \sum_{j=1}^{W} |\hat{h}_i^{(j)} - h_i^{(j)}|^2$$

où $\hat{h}_i^{(j)}$ sont les estimations de canal après exécution d'une détection multi-utilisateur avec les estimations de variance de bruit $\hat{\sigma}_{n-1}^2$, et les valeurs initiales de $\hat{h}_i^{(j)}$ sont toutes zéro, la variance de bruit étant estimée à partir des coefficients ignorés de la sortie de canal estimée, et mise à niveau de façon récursive.

26. Le dispositif selon la revendication 25, où les moyens récursifs incluent des moyens d'exécution de six (6) récursions.

**FIG. 1**

**FIG. 2**

ESTIMATED
VARIANCE
(LINEAR SCALE)

*FIG. 3a*

ESTIMATED
VARIANCE
(LINEAR SCALE)

*FIG. 3b*

ESTIMATED
VARIANCE
(LINEAR SCALE)

*FIG. 3c*

EP 1 428 338 B1

FIG. 4a

FIG. 4b

FIG. 4c

**FIG. 5a**

**FIG. 5b**

**FIG. 5c**

RECEIVED MIDAMBLE PART

12 — CHANNEL
ESTIMATION

INPUT:
- $N_{chest}$
- $h_i$, i=1,2...,$N_{chest}$

CHEST OUTPUT:
- $N_{chest}$
- $h_i$, i=1,2...,$N_{chest}$

14 — NOISE VAR.
ESTIMATION

PARAMETERS:
- BURST TYPE
  1 OR 2
- $K_{max}$
- $N_{path}$

16 — POST
PROCESSING

(A):
A FEW NONZERO $h_i$
OR
INDICES OF
NONZERO CHIPS

OUTPUT: (C)
ESTIMATED NOISE VARIANCE

$K_{active}$

MIDAMBLE
DETECTION

18 ---18a

(B):
$K_{active}$. NUMBER OF
ACTIVE MIDAMBLE
SHIFTS

(A), (B), (C)

22

20 — BLINDE CODE
DETECTION

DATA
DETECTION

ESTIMATED
SYMBOL
SEQUENCE

CODE
NUMBERS

10

RECEIVED DATA FIELD

**FIG. 6**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0966113 A1

- US 5278871 A1